# EUROPEAN PATENT APPLICATION

(11) **EP 3 553 482 A1**
(43) Date of publication of application: **16.10.2019**
(21) Application number: 18166434.3
(22) Date of filing: 10.04.2018
(51) Int. Cl.: G01K 13/02, G01K 1/08

(54) **THERMOWELL WITH REDUCED SENSITIVITY TO VORTEX INDUCED VIBRATIONS**

(71) Applicant: Endress+Hauser Wetzer GmbH+Co. KG, 87484 Nesselwang (DE)
(72) Inventor: Casirati, Paolo, 24047 Treviglio (IT); Del Bianco, Massimo, 20900 Monza (IT); Pietroni, Michele, 20097 S.Donato (IT); Kumar, Vivek, 4123 Allschwil (CH)
(74) Representative: Andres, Angelika Maria

(57) **Abstract**

The present invention concerns a thermowell (3) for use with an apparatus (1) for determining and/or monitoring a process variable of a medium (M) in a vessel or pipe (2) comprising a tubular element (4) having a first end section (4a), a second end section (4b) with a closed end, and a hollow space (5) defined by an inner cross-sectional surface (s) and a predeterminable height (h) parallel to a longitudinal axis (A) of the tubular element (4), which hollow space (5) serves for receiving a measuring insert (6) for determining and/or monitoring the process variable, and a fastening unit (7),which fastening unit (7) serves for mounting the thermowell (3) to the vessel or pipe (2) such that the tubular element (4) at least partially extends into an inner volume of the vessel or pipe (2). According to the present invention, the thermowell (3) is at least partially constructed such, that an outer cross-sectional surface (S) at least partially, in particular at least in the second end section (4b), has an airfoil shape. Further, the present invention concerns an apparatus (1) for determining and/or monitoring a process variable of a medium (M) in a vessel or pipe (2), comprising at least one thermowell (3) according to the present invention.

## Description

The invention refers to a thermowell for use with an apparatus for determining and/or monitoring a process variable of a medium in a vessel or pipe and to an apparatus with such thermowell.

For instance, thermowells are frequently used for thermometers which serve for determining and/or monitoring the temperature of a medium. The measuring insert of a thermometer usually at least comprises one temperature sensor for determining and/or monitoring the temperature of the medium. The temperature sensor in turn comprises at least one temperature-sensitive component, e.g. in the form of a resistive element, especially a platinum element, or in the form of a thermocouple. However, the present invention may also be employed with measuring devices having a thermowell but relying on different measuring principles.

At least during operation, the measuring insert is at least partially arranged inside the thermowell. The thermowell then in principle performs the function of a housing, which protects the measuring insert against the environment, e.g. aggressive media, forces, and/or high pressures and/or temperatures in the respective process. Another issue may be the flow of a medium, which can also cause damage of the measuring insert, especially in case of comparably high flow velocities. Another advantage of a thermowell is provided by the possibility to hot-swap the measuring inserts without any shutdown of the respective process.

If thermometers are deployed in pipes, they are exposed to the flow of the respective medium. The thermometers may be installed such, that a longitudinal axis through the thermometer is essentially perpendicular to the fluid flow direction. However, it is also possible to install the thermometer in curved area of the pipeline.

The flow of the medium is then responsible for different mechanical forces acting on the thermometer, e. g. shear forces or forces induced by vortex shedding which result in a vortex induced oscillation of the thermometer.

Vortex shedding in fluid dynamics is also known as the "Karman vortex street". It is a repeating pattern of swirling vortices in alternating directions caused by the unsteady separation of flow of a medium around a body, causing said body to vibrate. The closer the frequency of the vibrations is to the natural frequency of the body around which the medium flows, the more the body vibrates. The frequency of the vibrations is e. g. determined by process parameters, such as the physical properties of the medium, the flow velocity and the shape of the thermometer.

A thermometer being subject to vortex shedding, in the worst case can result in damage of the thermometer or even the collapse of the thermometer. At least, vortex shedding generally causes a reduction in the service and operating life of the thermometer.

The possible presence of vortex shedding must be duly considered in the development of a thermometer for use with a flowing medium, and must be carefully considered when designing the thermometer. Today, standard methods, such as ASME PTC 19.3 TW-2000, are available, which define design rules. With the help of said rules, a thermometer design can further be checked with regards to the thermometer sensitivity towards vortex shedding. The methods only apply, however, to certain types of thermometers and only for certain process conditions. The basic principle underlying the design rules is to increase the natural frequency of vibrations of the thermometer to separate the natural frequency from the vortex shedding frequency. In such way, the dangerous condition of resonant vortex induced vibrations becomes minimized. For this purpose, commonly the geometry of the thermometer is varied, e. g. by reducing its length and/or by increasing its diameter.

Alternatively, when functional constraints don t allow certain changes in the dimensions of the thermometer, mechanical supports or absorbers are frequently used to reduce the thermometers sensitivity to vortex shedding. These mechanical supports or absorbers are usually fitted into a gap between the opening of the vessel or pipe and the outside surface of the thermometer. The supports or absorbers then increase the natural frequency of the thermometer by reducing the free length of the thermometer. However, it proves difficult to fit the supports or absorbers in such a way that a high level of coupling and therefore the desired effect can be achieved.

Structural elements for the described use are e. g. known from the prior art, particularly from the offshore sector, where vortex shedding is tried to be avoided completely or to at least weaken vortex shedding to a large extent.

US 2004/0051004 A1 describes a structure to reduce vortex shedding. Smoothly curved protuberances are added to an elongate body. The elongate bodies can then be adapted for example for use as chimneys of a factory, towers of a wind turbine, a support member of an offshore platform or an underwater cable.

US 8,500,367 B2 in turn describes a way to protect a marine riser against vibrations caused by vortex shedding. The riser is routed through discoidal elements at regular intervals which have U-shaped indentations along their circumference.

US 6,401,646 B1 teaches about a shell that can be secured to an underwater cable, for example.

Said shell has fins at opposite locations to reduce vortex shedding.

In the field of thermometers, it has e. g. become known from EP03184980A1 to minimize a thermometer sensitivity towards vortex shedding by providing a tubular sheath, which is perforated by circular holes of equal diameter. The sheath is fitted on the thermowell in such a way that the sheath covers at least an end section of the thermowell which faces the medium. In contrast, US9528918B2 suggests a thermowell with a curved outer surface. Both documents provide solutions to reduce the effects of vortex induced vortex shedding. However, the flow profile of the medium is strongly influenced by applying such structural modifications on the thermowell, which can be disadvantageous.

Based on these drawbacks the objective technical problem underlying the present invention is to provide a thermowell with reduced sensitivity to vortex shedding with improved fluidic properties.

This problem is solved by means of the thermowell according to claim 1 and by the apparatus according to claim 14.

Regarding the thermowell the objective technical task is solved by means of a thermowell for use with an apparatus for determining and/or monitoring a process variable of a medium in a vessel or pipe comprising
a tubular element having
   a first end section,
   a second end section with a closed end, and
   a hollow space defined by an inner cross-sectional surface and a predeterminable height parallel to a longitudinal axis of the tubular element, which hollow space serves for receiving a measuring insert for determining and/or monitoring the process variable, and
a fastening unit,
   which fastening unit serves for mounting the thermowell to the vessel or pipe such that the tubular element at least partially extends into an inner volume of the vessel or pipe.

According to the present invention, the thermowell is at least partially constructed such, that an outer cross-sectional surface at least partially, in particular at least in the second end section, has an airfoil shape.

In constructing the outer cross-sectional surface at least partially such that it has an airfoil shape, vortex shedding can be largely attenuated or even prevented. A reduced sensitivity towards vortex shedding is of importance in case of fluids with a comparably high flow velocity. Because of the reduced sensitivity towards vortex shedding, also the resulting forces acting on the thermometer are strongly reduced, which in turn increases the service life and operating life of the thermometer.

The thermometer is usually mounted on the pipe or vessel via an opening in the latter having a process connection for connecting the thermometer to the vessel or pipe. The thermowell then at least partially extends into an inner volume of the vessel or pipe and is in contact with the flowing medium. The thermometer is usually arranged such that its longitudinal axis proceeds perpendicular to the flow direction of the medium. The length of the thermowell in turn may be chosen such, that it reaches the center area of the inner volume of the pipe, or even up to the second third of the pipe diameter. Preferably, the thermometer is mounted in an essentially straight part of the pipe or vessel.

The at least partial construction of the outer cross-sectional area with an airfoil shape results in various advantages. A wing shape on the one hand has an advantageous fluidic behavior. The influence on the flow profile of the flowing medium becomes highly reduced compared to other geometries which are commonly used to construct a thermowell. On the other hand, an airfoil shape can be easily constructed or machined, so that production effort and/or costs can be kept low.

The inner volume defined by the inner cross-sectional surface and predeterminable height parallel to a longitudinal axis of the tubular element serves for receiving a measuring insert, e. g. a temperature probe. It is thus preferred if the inner cross-sectional surface essentially has a round or circular shape.

The thermowell according to the present invention can be used in a wide range of applications. For example, it can be used for thermometers or thermal flowmeters. The measuring devices even does not necessarily need to have a thermowell. It is also possible that a measuring insert, which has a rod-like design, is covered by a thermowell according to the present invention for protection against vibrations which are induced through vortex shedding, only.

In one preferred embodiment of the thermowell, the tubular element is at least partially constructed such, that its outer cross-sectional surface at least partially, in particular at least in the second end section, has an airfoil shape. In this case, the thermowell can be made by one piece which can be advantageous in terms of construction methods.

It is of advantage for this embodiment, if the tubular element is further constructed such, that its outer cross-sectional surface has an essentially round shape in the first end section. The cross-sectional surface of the tubular element thus changes from a round shape in the first end section towards an airfoil shape in the second end section. The transition between the two shapes can either be abrupt at a certain height of the tubular element or continuously over the length of the tubular element.

In another preferred embodiment of the thermowell, the tubular element is constructed such, that its outer cross-sectional surface has an essentially round shape along its longitudinal axis. Further, at least one flow-forming element is provided, which flow-forming element is constructed such, that it at least partially, in particular at least in the second end section, surrounds the tubular element, and wherein the flow-forming element is constructed such that its outer cross-sectional surface at least partially, in particular at least in the second end section of the tubular element, has an airfoil shape. In this manner, already existing state of the art thermowells can be optimized subsequently. The flow-forming element can be attached before or after introducing the thermowell into a process.

Various embodiments are conceivable for the flow-forming element, all of which are covered by the present invention.

In one exemplary embodiment, the flow-forming element is attached, especially welded or soldered, to the tubular element and/or the fastening unit.

In another exemplary embodiment, the flow-forming element is built by at least two interconnectable, in particular bendable, sheet elements, which in particular are joined together by means of welding or soldering.

One preferred embodiment of the thermowell comprises, that a ratio between a maximum length and a maximum width of the outer cross-sectional surface at least in the second end section is in the range of 0.5 to 0.9. Here, it is assumed that the thermowell is manufactured such that it fits in standard openings of standard vessels or pipes used in the field of industrial process measurement technology, which have diameters in the range of about 20-40 mm. Accordingly, the thermowell may be constructed in advance, i.e. before introducing it into the process.

It is preferred, if the outer cross-sectional surface is embodied so, that it is symmetric with respect to the outer cross-sectional surface's longitudinal axis. For instance, either the outer cross-sectional surface of the tubular element itself or that of the flow-forming element is at least partially embodied so, that it is symmetric with respect to the outer cross-sectional surface's longitudinal axis. Providing a symmetric shape of the outer cross-sectional surface is of importance regarding various forces that may act on the thermowell, in particular during operation. For instance, the influence of lifting forces that may act on the thermowell and which may cause a bending load to the thermowell, can be avoided.

In a preferred embodiment, the inner cross-sectional surface is positioned and dimensioned such, that a minimum wall thickness of the tubular element is about 1 mm.

In a further preferred embodiment, a dimension of the outer cross-sectional surface is variable along the longitudinal axis of the tubular element, in particular, the dimension of the outer cross-sectional surface in the second end section is smaller than the dimension of the outer cross-sectional surface in the first end section. It is possible, for example, to vary the size or shape of the outer cross-sectional surface along the longitudinal axis of the tubular element.

In a further embodiment of the thermowell an aligning unit is provided for positioning the tubular element relative to the vessel or pipe, in particular the aligning unit serves for positioning the thermowell such that the longitudinal axis of the outer cross-sectional surface is parallel to a wall of the vessel or pipe and/or the flow direction of the medium. The longitudinal axis relates to that section of the thermowell which is constructed having the airfoil shape.

It is preferred, if an angle between the wall of the vessel or pipe and/or the fluid flow direction and the longitudinal axis of the outer cross-sectional surface is less than about 1°. It is also preferred, if a leading edge of the outer cross-sectional surface is positioned such that it faces the fluid flow direction.

Various embodiments are feasible regarding the aligning unit. The aligning unit can be customized depending on the particular thermowell and application. For instance, the aligning unit may be assigned to the fastening unit, in particular, the aligning unit may be part of the fastening unit. However, the fastening unit may also be one or more separate pieces that can be mounted on the thermowell or onto the vessel and/or pipe before inserting the thermowell.

In one embodiment, the aligning unit comprises a marker element, e.g. a notch or a bore which is attached or inserted into at least one component of the thermowell.

In one embodiment, a fitting is provided for positioning the thermowell at or in the vessel or pipe. The fitting may be a sealing element which may be inserted into an opening of the vessel or pipe through which the thermowell is inserted. If a fitting is provided, that aligning unit may also be assigned to the fitting, in particular, the aligning unit may at least partially be part of the fitting. For instance, the fitting may be constructed such, that the thermowell can be rotated when inserted into the opening of the vessel or pipe.

Similarly, if the aligning unit is assigned to the fastening unit, the fastening unit may be constructed such, that the thermowell can be rotated when inserted into the opening of the vessel or pipe.

In a further embodiment of the thermowell, the fastening unit comprises a screwed plug, a weld-in piece, a threaded connection or a flange.
In another preferred the thermowell further comprises a pipe section, which pipe section is attached to the tubular element. Preferably, the pipe section and the tubular element are made by one piece. For instance, the pipe section and the tubular element are produced by means of a generative production method, in particular an additive production method, e.g. 3D printing.

The pipe section itself in turn is preferably constructed such that it is connectable into an existing pipe line system.

In this regard, it is preferred, if the pipe section and the tubular element are connected in a first connection point along the longitudinal axis of the tubular element such that the tubular element extends into an inner volume of the pipe section. In particular, at least the second end section of the tubular element extends into the inner volume of the pipe section. Alternatively, it is preferred, if the pipe section and the tubular element are connected in the first connection point and in a second connection point which is arranged in the second end section of the tubular element. In this case, the tubular element ends with a wall of the pipe section and proceeds through the inner volume of the pipe section. For instance, the two connection points are arranged at two points of the wall of the pipe section diametrically opposed to each other.

Finally, it is of advantage, if the tubular element, the flow-forming element and/or the pipe section is/are made from a metallic material, preferably stainless steel or a metal alloy, a ceramic material, a synthetic material or a composite material. They may all be made of the same material or also may be composed of different materials.

The objective technical problem is also solved by means of an apparatus for determining and/or monitoring a process variable of a medium in a vessel or pipe, comprising at least one thermowell according to the present invention.

In one embodiment of the apparatus the measuring insert comprises at least one temperature sensor for determining and/or monitoring a temperature of the medium. The temperature sensor in turn may comprise a resistive element or a thermoelement.

It should be noted that the embodiments described in connection with the thermowell can also be applied mutatis mutandis to the proposed apparatus and vice versa.

The present invention will now be explained in more detail by means of Figures Fig. 1-Fig.7.
Fig. 1: illustrates the origin of vortex shedding at a thermometer exposed to a flowing medium;
Fig. 2: shows a thermometer having a state of the art thermowell;
Fig. 3: shows a first embodiment of the present invention;
Fig. 4: illustrates various degrees of freedom regarding the construction of the airfoil-shaped outer cross-sectional surface;
Fig. 5 shows various exemplary embodiments of a thermowell according to the present invention,
Fig. 6 shows two embodiments with an aligning unit according to the present invention; and
Fig. 7 shows two embodiments for which the thermowell comprises a pipe section attached to the tubular element.

In the figures, the same elements are always provided with the same reference symbols.

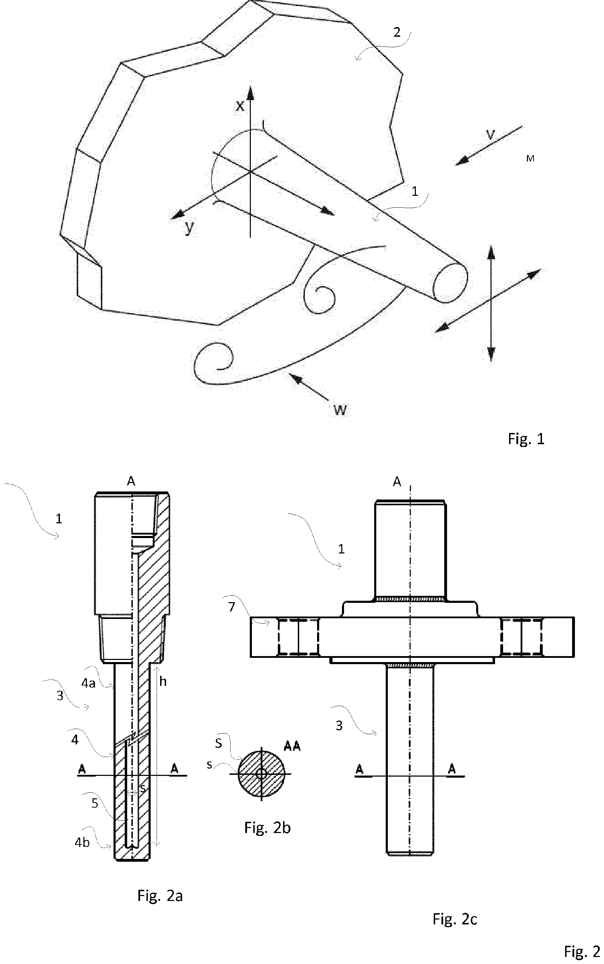

Fig. 1 illustrates the origin of vortex shedding w at a cylindrical, conically tapered thermometer 1 exposed to a flowing medium M in a pipe 2, which is indicated by one of its walls. Downstream of thermometer 1 in the flow direction v of the medium, a ridge-like pattern develops. Depending on the flow velocity v of the medium M, this can lead to vortex shedding which in turn may cause the thermometer 1 to vibrate.

The vibrations are mainly due to two forces acting on the thermometer 1, a shear force in the in y-direction and a lifting force in the x-direction. The shear force causes oscillations at a frequency fₛ, while the lifting force causes oscillates at a frequency of 2fₛ. The frequency fₛ now depends on the flow velocity v of the medium M, and on various physical or chemical medium properties such as its viscosity and density, as well as on the dimensions of the thermometer 1, such as its diameter and length. The closer the frequency fₛ is to the natural frequency of the thermometer 1 and the higher the flow velocity v of the medium M, the greater are the resulting oscillation causing forces.

As a result of the vibration causing forces, the thermometer 1 can be damaged or even break down completely. This is known as the so-called resonance condition.

Fig. 2 shows a state of the art thermometer 1 having a thermowell 3. As can be seen in Fig. 2a, the thermowell 3 comprises a tubular element 4 a first end section 4a, and a second end section 4b with a closed end. The tubular element 4 further comprises a hollow space 5 which is defined by an inner cross-sectional surface s and a predeterminable height h parallel to a longitudinal axis A of the tubular element 4, which hollow space 5 serves for receiving a measuring insert 6 [not shown] for determining and/or monitoring the process variable, e.g. the temperature of the medium M.

Further, as illustrated in Fig. 2c, a fastening unit 7 is provided, which for the present example is attached to the tubular element 4. This fastening unit 7 in principle is a process connection and serves for mounting the thermowell 3 to the pipe 2 [not shown] such that the tubular element 4 at least partially extends into an inner volume of pipe and such that it is at least partially in contact with the flowing medium M.

The outer cross-sectional surface of a state of the art thermowell usually has an essentially round shape as becomes visible in Fig. 2b. Such geometrical construction of the thermowell 3 often leads to undesired vortex induced vibrations of the thermometer 1. The present invention now suggests a thermowell for a thermometer that has a reduced sensitivity to vortex shedding while at the same time providing improved fluidic properties.

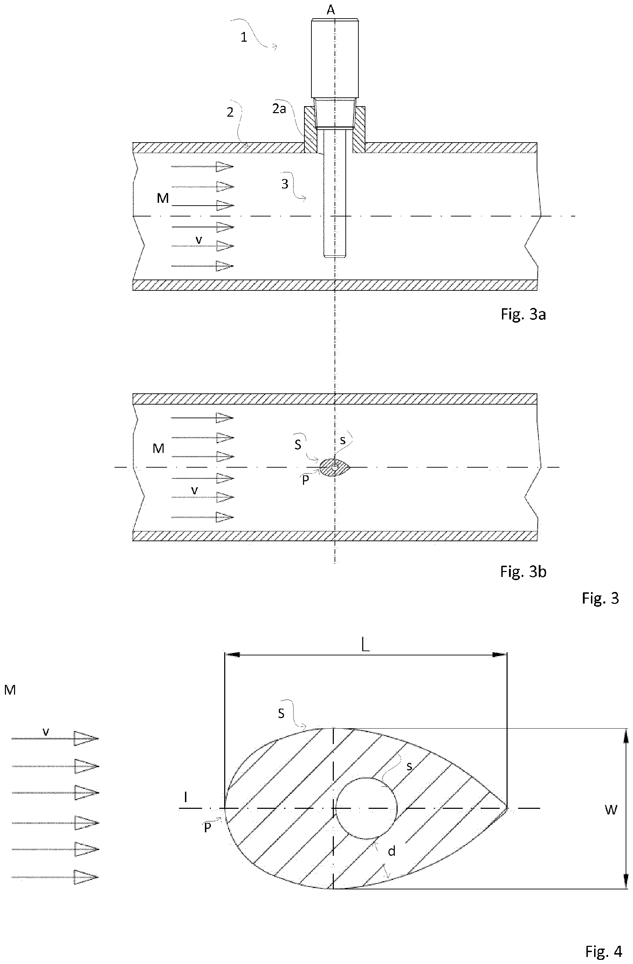

A first embodiment of a thermowell 2 or thermometer 1 according to the present invention is shown in Fig. 3. Fig. 3a comprises a scheme of a thermometer 1 introduced into a pipe 2 via the opening 2a. The pipe 2 contains a medium M flowing at the velocity v. The thermowell 2 is in direct contact with the medium M. As becomes visible in Fig. 3b, the outer cross-sectional surface S of the tubular element 3 has an airfoil shape, whereas the leading edge P faces the flow direction of the medium M. In the present example, the outer cross-sectional surface S of the tubular element 4 has an airfoil shape along its entire longitudinal axis A. As will be seen in connection with Fig. 4 for other embodiments it may also be sufficient, if the thermowell 2 comprises an airfoil shape only in the second end section 4b of the tubular element 4.

Several degrees of freedom are available for the design and dimensions of the airfoil shaped section of the tubular element 4, which is illustrated by Fig. 4. It is preferred if, the outer cross-sectional surface S is symmetric with respect to the outer cross-sectional surface's S longitudinal axis I.

The maximum length the outer-cross-sectional surface L is preferably slightly smaller than the diameter of the opening 2a, into which the thermowell 3 is introduced into the pipe 2. In a preferred embodiment, a ratio between a maximum length L and a maximum width W of the outer cross-sectional surface is in the range of 0.5 to 0.9.

Other considerations concern the ratio between the inner s and outer cross-sectional surfaces S. To ensure sufficient mechanical stability of the thermowell 2, it is preferred, if the inner cross-sectional surface s is positioned and dimensioned such, that a minimum wall thickness d of the tubular element 4 is about 1 mm.

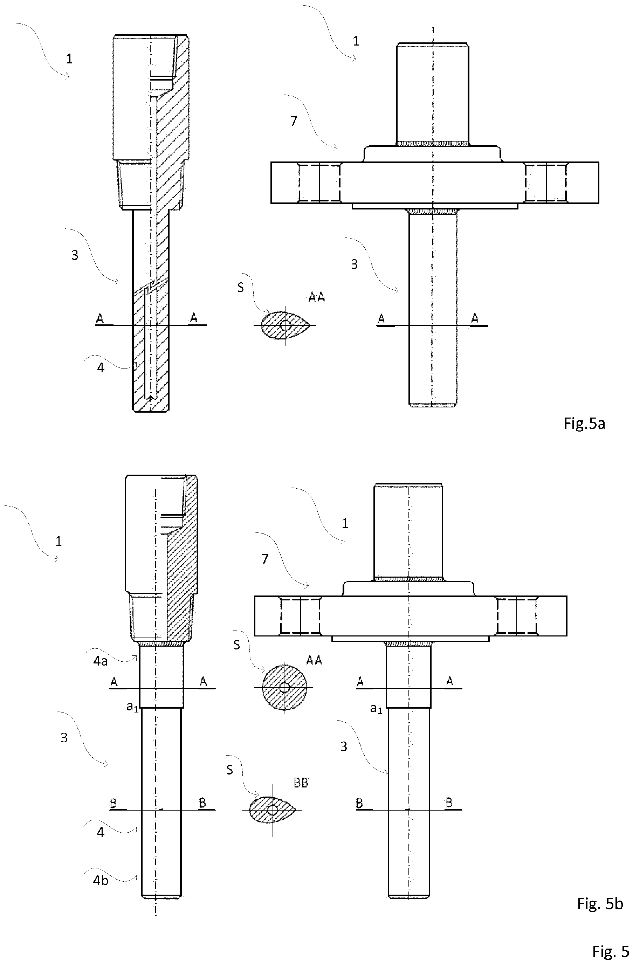

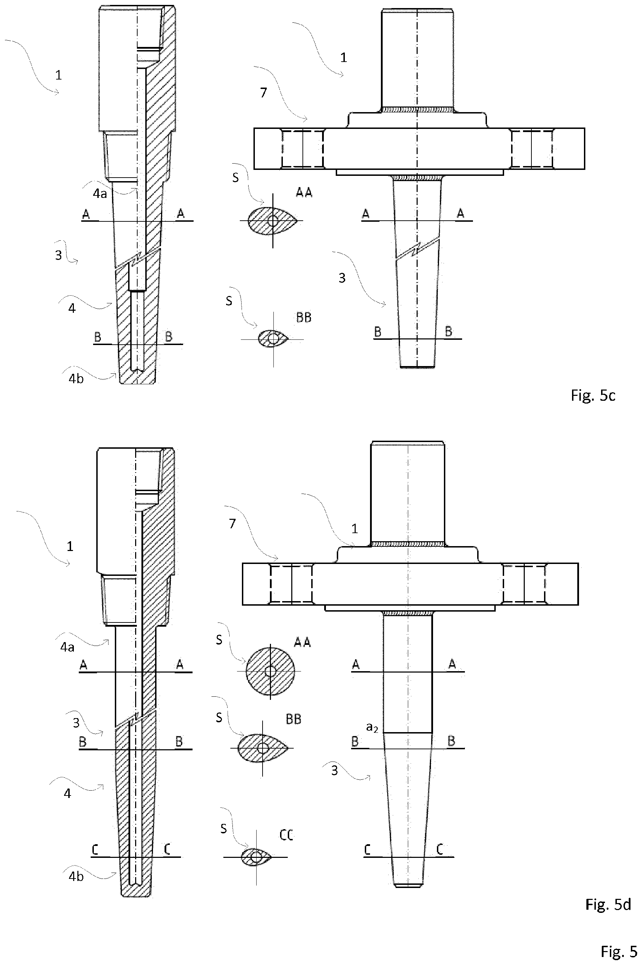

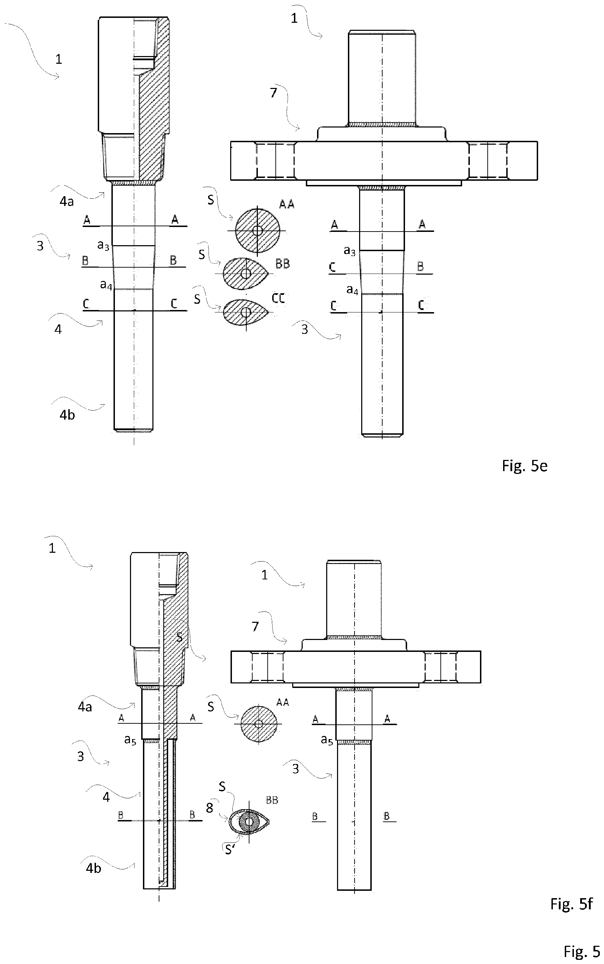

As already mentioned, it is sufficient for the purpose of the present invention, if the outer cross-sectional surface S has an airfoil shape in the second end section 4b of the tubular element 4. The second end section 4b is most sensitive to vortex shedding. This enables several different construction possibilities, out of which a few especially preferred embodiments will be subject to Fig. 5.

A first possible embodiment of the thermowell 3 is shown in Fig. 5a. The embodiment corresponds to that one shown in Fig. 3. The outer cross-sectional surface S of the tubular element 4 of the thermowell 3 has an airfoil shape everywhere.

In a second possible embodiment, as shown in Fig. 5b, the outer cross-sectional surface S of the tubular element 4 has a round shape in the first end section 4a and an airfoil shape in the second end section 4b. An abrupt transition between the two shapes occurs at height a₁ along the longitudinal axis A of the thermowell 3 or tubular element 4 respectively.

In the third exemplarily shown embodiment, as depicted in Fig. 5c, the outer cross-sectional surface S of the tubular element 4 of the thermowell 3 has an airfoil shape everywhere, but the surface s dimension varies along the longitudinal axis A of the thermowell 3 or tubular element 4 respectively. The dimension of the surface S decreases continuously from the first end section 4a towards the second end section 4b.

In the fourth possible embodiment shown in Fig. 5d, the outer cross-sectional surface S of the tubular element 4 of the thermowell 3 has a round shape in the first end section 4a and smoothly merges into an airfoil shape at height a₂, then continuously decreases regarding its dimensions towards the second end section 4b.

In a fifth embodiment of the thermowell, as shown in Fig. 5e, the outer cross-sectional surface S of the tubular element 4 of the thermowell 3 has a round shape in the first end section 4a, abruptly transfers into an airfoil shape at height a₃, continuously decreases regarding its dimensions until height a₄ and then remains continuous until the second end section 4b.

A last alternative embodiment of a thermowell 3 according to the present invention is finally shown in Fig. 5f. The outer cross-sectional surface S of the tubular element 4 remains with a round shape everywhere. However, at height a₅, the dimension of the outer cross-sectional surface abruptly decreases. Starting from this height a₅, a flow-forming element 8 is provided which is attached to the tubular element 4. The outer cross-sectional surface S of the flow-forming element 8 in this case has an airfoil shape and surrounds the tubular element 4. It shall be noted, that the flow-forming element can be constructed according to all previously described embodiments as well.

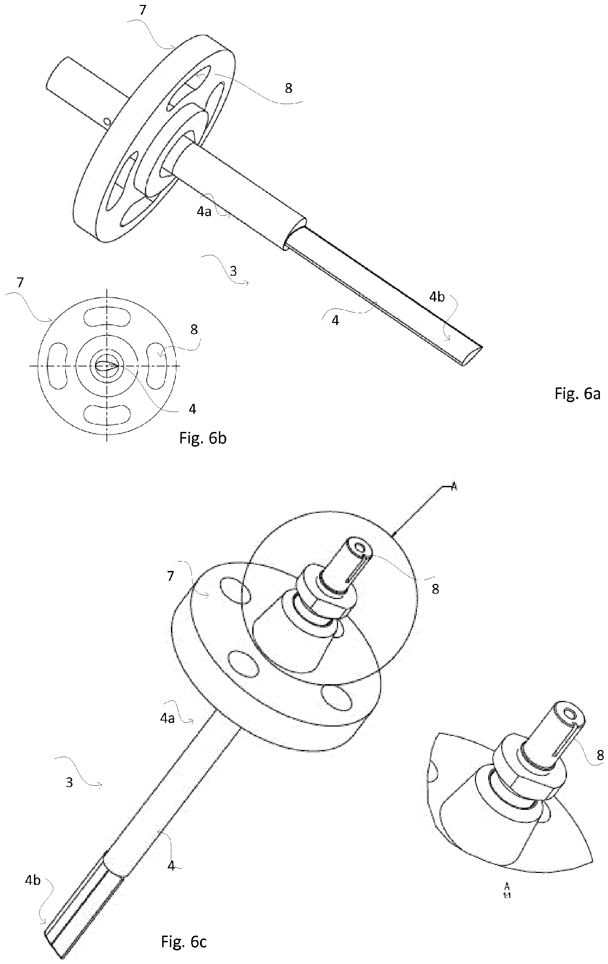

Regarding the aligning unit 8, two exemplary and preferred embodiments are subject to Fig. 6. In the embodiment shown in Fig. 6a, the aligning unit 8 is assigned to the fastening unit 7. The fastening unit 7 in the present example is a flange which is shown in greater detail in Fig. 6b. The aligning unit 8 is given by the holes in the flange which are constructed such, that the thermowell 3 can be rotated with respect to the pipe or vessel 2 when inserted into an opening of the vessel or pipe 2. The corresponding holes for inserting screws for fastening the thermometer 1 into the opening of the pipe or vessel usually do have an essentially round shape, so that a slight rotation of the thermometer 1 inside the opening serves for adjusting the tubular element 4 or the thermowell 3 with respect to a wall of the pipe or vessel 2 and/or the flow direction of the medium M.

In a second embodiment, as shown in Fig. 6c, the aligning unit 8 is embodied in the form of a marker element, arranged in a part of the thermometer 1, remaining outside the vessel or pipe 2. The marker element 8 is shown in greater detail in Fig. 6d. It is embodiment in the form of a notch which is in line with the leading edge P of the tubular element 4 in that area where it has an airfoil shape.

It shall be noted, that the two exemplarily embodiments for the aligning unit 8 shown in Fig. 6 may also be combined with each other. Independent on the chosen embodiment, the aligning unit 8 serves for positioning the thermowell 3 such that the longitudinal axis I of the outer cross-sectional surface S is parallel to a wall of the vessel or pipe 2 and/or the flow direction v of the medium M. That way, the leading edge P faced the flow direction v of the medium M.

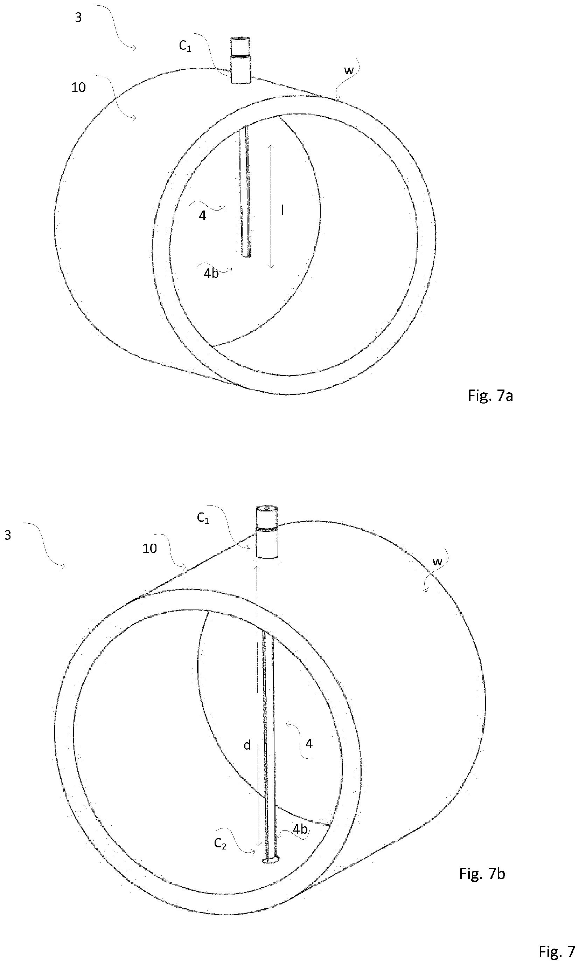

Another preferred embodiment of the thermowell 3 is finally shown in Fig. 7. In this embodiment, the thermowell 3 further comprises a pipe section 10. The pipe section 10 is constructed such that it may be inserted into an existing pipe system [not shown]. Further, the pipe section 10 is attached to the tubular element 4. For instance, the pipe section 10 and the tubular element 4 are made by one piece.

In a first embodiment, as shown in Fig. 7a, the pipe section 10 and the tubular element 4 are connected in a first connection point C₁ along the longitudinal axis I of the tubular element 4 such that the tubular element 4 extends into an inner volume of the pipe section 10. At the connection point C₁, the tubular element 4 proceeds through the wall W of the pipe section 10. A part of the tubular element 4, including the second end section 4b, extends into an inner volume of the pipe section 10.

In a second embodiment, as shown in Fig. 7b, the pipe section 10 and the tubular element 4 are connected in the first connection point C₁ and in a second connection point C₂ which is arranged in the second end section 4b of the tubular element 4. The tubular element 4 ends with the wall w of the pipe section 10, and proceeds from the first C₁ to the second C₂ connection point through the inner volume of the pipe section 10. Thereby, the first C₁ to the second C₂ connection point are arranged at two points of the wall w of the pipe section 10 diametrically opposed to each other. That way, the longitudinal axis of the pipe section is parallel to a diameter of the pipe section 10.

### List of reference symbols

- 1: thermometer
- 2: pipe, vessel
- 3: thermowell
- 4: tubular element
- 4a: first end section
- 4b: second end section
- 5: inner volume
- 6: measuring insert
- 7: fastening unit
- 8: flow-forming element
- 9: aligning unit
- 10: pipe section
- M: medium
- V: flow direction of the medium
- W: vortex shedding
- A: longitudinal axis of the tubular element
- s: inner cross-sectional surface
- S: outer cross-sectional surface
- P: leading edge
- h: height along the longitudinal axis
- L: maximum length of outer cross-sectional surface
- W: maximum widths of outer cross-sectional surface
- I: longitudinal axis of outer cross-sectional surface

## Claims

1. Thermowell (3) for use with an apparatus (1) for determining and/or monitoring a process variable of a medium (M) in a vessel or pipe (2) comprising
a tubular element (4) having
a first end section (4a),
a second end section (4b) with a closed end, and
a hollow space (5) defined by an inner cross-sectional surface (s) and a predeterminable height (h) parallel to a longitudinal axis (A) of the tubular element (4), which hollow space (5) serves for receiving a measuring insert (6) for determining and/or monitoring the process variable, and
a fastening unit (7),
which fastening unit (7) serves for mounting the thermowell (3) to the vessel or pipe (2) such that the tubular element (4) at least partially extends into an inner volume of the vessel or pipe (2),
**characterized in that**
the thermowell (3) is at least partially constructed such, that an outer cross-sectional surface (S) at least partially, in particular at least in the second end section (4b), has an airfoil shape.

2. Thermowell (3) according to claim 1,
wherein the tubular element (4) is at least partially constructed such, that its outer cross-sectional surface at least partially, in particular at least in the second end section (4b), has an airfoil shape.

3. Thermowell (3) according to claim 2,
wherein the tubular element (4) is constructed such, that its outer cross-sectional surface (S) has an essentially round shape in the first end section (4a).

4. Thermowell (3) according to claim 1,
wherein the tubular element (4) is constructed such, that its outer cross-sectional surface (S) has an essentially round shape along its longitudinal axis (A), and
wherein at least one flow-forming element (8) is provided, which flow-forming element (8) is constructed such, that it at least partially, in particular at least in the second end section (4b), surrounds the tubular element (4), and
wherein the flow-forming element (8) is constructed such that its outer cross-sectional surface (S) at least partially, in particular at least in the second end section (4b) of the tubular element (4), has an airfoil shape.

5. Thermowell (3) according to claim 4,
wherein the flow-forming element (8) is attached, especially welded or soldered, to the tubular element (4) and/or the fastening unit (7).

6. Thermowell (3) according to claim 4 or 5,
wherein the flow-forming element (8) is built by at least two interconnectable, in particular bendable, sheet elements, which in particular are joined together by means of a welding or soldering.

7. Thermowell (3) according to one of the preceding claims,
wherein a ratio between a maximum length (L) and a maximum width (W) of the outer cross-sectional surface (S) at least in the second end section (4b) is in the range of 0.5 to 0.9.

8. Thermowell (3) according to one of the preceding claims,
wherein the outer cross-sectional surface (S,S) is embodied so, that it is symmetric with respect to the outer cross-sectional surface's longitudinal axis (I).

9. Thermowell (3) according to one of the preceding claims,
wherein the inner cross-sectional surface (s) is positioned and dimensioned such, that a minimum wall thickness (d) of the tubular element (4) is about 1 mm.

10. Thermowell (3) according to one of the preceding claims,
wherein a dimension of the outer cross-sectional surface (S) is variable along the longitudinal axis (A) of the tubular element (4), in particular, the dimension of the outer cross-sectional surface (S) in the second end section (4b) is smaller than the dimension of the outer cross-sectional surface (S) in the first end section (4a).

11. Thermowell (3) according to one of the preceding claims,
wherein an aligning unit (9) is provided for positioning the tubular element (4) relative to the vessel or pipe (2), in particular, the aligning unit (9) serves for positioning the thermowell (3) such that a longitudinal axis (I) of the outer cross-sectional surface (S) at least in a section where it has an airfoil shape is parallel to a wall of the vessel or pipe (2) and/or the flow direction of the medium (M).

12. Thermowell (3) according to one of the preceding claims,
further comprising a pipe section (10), which pipe section (10) is attached to the tubular element (4).

13. Thermowell (3) according to claim 13,
wherein the pipe section (10) and the tubular element (4) are connected in a first connection point (C₁) along the longitudinal axis (I) of the tubular element (4) such that the tubular element (4) extends into an inner volume of the pipe section (10), or
wherein the pipe section (10) and the tubular element (4) are connected in the first connection point (C₁) and in a second connection point (C₂), which is arranged in the second end section (4b) of the tubular element (4).

14. Apparatus (1) for determining and/or monitoring a process variable of a medium (M) in a vessel or pipe (2), comprising at least one thermowell (3) according to one of the preceding claims.

15. Apparatus (1) according to claim 14,
wherein the measuring insert (6) comprises at least one temperature sensor for determining and/or monitoring a temperature of the medium (M).
